# EUROPÄISCHE PATENTANMELDUNG

(11) **EP 1 340 543 A1**
(43) Veröffentlichungstag der Anmeldung: **03.09.2003**
(21) Anmeldenummer: 02004685.0
(22) Anmeldetag: 28.02.2002
(51) Int. Cl.: B01L 3/00, G01N 27/447

(54) **Mikrofluidsystem**

(71) Anmelder: ibidi GmbH, 80799 München (DE)
(72) Erfinder: Kahl, Dr. Valentin, 80636 München (DE)
(74) Vertreter: Grünecker, Kinkeldey, Stockmair & Schwanhäusser Anwaltssozietät

(57) **Zusammenfassung**

Die Erfindung betrifft ein Mikrofluidsystem mit mindestens einer durchströmbaren Kammer und mindestens einer mit der Kammer in Fluidverbindung stehenden Anschlußeinrichtung, die in Form einer sich verjüngenden Vertiefung oder einer sich verjüngenden Erhöhung ausgebildet ist. Die Erfindung betrifft außerdem eine Steckereinrichtung zur Verwendung in einem solchen Mikrofluidsystem, wobei die Steckereinrichtung derart ausgebildet ist, dass sie in Eingriff mit der Anschlußeinrichtung bringbar ist.

## Beschreibung

Die Erfindung betrifft ein Mikrofluidsystem mit mindestens einem durchströmbaren Volumen und mindestens einer mit dem Volumen verbundenen Anschlußeinrichtung sowie eine Steckereinrichtung zur Verwendung in einem solchen Mikrofluidsystem.

Mikrofluidsysteme, auch mikrofluidische Systeme genannt, haben hohes Potential bei der Analyse und Diagnostik in biologischen und medizinischen Anwendungen. Außerdem können sie zur Synthese von chemischen und biologischen Produkten, z.B. als Durchflußreaktoren, verwendet werden.

Mikrofluidische Systeme zeichnen sich dadurch aus, dass in kleinen Strukturen sehr geringe Mengen von flüssigen Medien transportiert werden. Dabei variiert das Flüssigkeitsvolumen von 10 ml bis unter 1 nl. Ein klarer Trend in der Mikrofluidik geht dahin, dass einzelne Komponenten durch spezielle Verbindungen zu einem Gesamtsystem untereinander verbunden werden sollen. Neben der Verbindung von mikrofluidischen Komponenten untereinander spielt gerade der Anschluß an die makroskopische Welt eine wichtige Herausforderung dar. Durch die miniaturisierten Strukturdimensionen, die typischerweise zwischen Nanometern und Millimetern liegen, werden an die Verbindungen besondere Anforderungen gestellt.

Diese sind: einfaches Anschließen und Lösen der Verbindungen; hohe Stabilität gegen ungewolltes Lösen; hohe Dichtheit gegen Gas- und Flüssigkeitsaustausch; geringes Totvolumen im Verhältnis zum Volumen der mikrofluidischen Komponente; Verhinderung des eindringens von unerwünschter Luft bei Herstellung der Verbindung (Luftblasen); Gewährleistung der Sterilität. Die Verbindungen sollte darüber hinaus biokompatibel und eventuell durchsichtig sein, um z. B. nachprüfen zu können, ob das Medium die Struktur tatsächlich durchströmt. Die Lösung sollte parallelisierbar und in der Herstellung günstig sein.

Es existieren zahlreiche als mikrofluidische Systeme bezeichnete Apparaturen.

Aus der US 5170286 (WO 9215037) ist z.B. eine Beobachtungskammer für Mikroskopie in Verbindung mit einem angeschlossenen Flußsystem bekannt. Es handelt sich dabei um eine "Sandwich"-Konstruktion die im wesentlichen aus einer speziellen Halterung (,central chamber element') besteht, in die Mikroskopie-Deckgläschen eingelegt werden, welche durch Deckplatten (,cover plates') fixiert werden. Der Durchfluß muss in dieser Kammer durch Schlauchverbindungen zu einem nicht auf der Kammer aufgebrachten Reservoir erzeugt werden. Über die Anschlüsse, insbesondere ihre Eigenschaften wie Stabilität, Dichtigkeit, einfache Handhabung, Totvolumen etc. werden keine Aussagen gemacht. Es wird auch nicht beschrieben, wie dieses anhand der Anschlußgeometrie gewährleistet werden kann.

In der WO 97/38300 ist ein Mikrokanalsystem aus Acryl beschrieben, das der elektrophoretischen Auftrennung dient. Der Mikrokanal wird jedoch nicht zum Durchspülen von Flüssigkeiten verwendet. Über die Anschlußgeometrie im Zusammenhang mit den genannten Anforderungen wird ebenfalls nichts berichtet.

In der WO 90/05295 ist ebenfalls ein optisches Biosensorsystem mit Kanälen beschrieben. Mittels Ventilen und Pumpen wird die zu untersuchende Flüssigkeit geführt. Über spezielle Geometrien der Anschlüsse und besondere Ausführungen der Anschlüsse zur Lösung der genannten Probleme wird hier ebenfalls nichts berichtet.

In der DE 197 11 281 C1 ist ebenfalls eine Vorrichtung mit mikrofluidischen Komponenten beschrieben. Der Schwerpunkt dieser Patentschrift liegt bei der Anordnung und Integration der funktionellen Schichten in dem Träger. Über die Geometrie der Anschlüsse wird hier generell nichts berichtet.

Über Deckelsysteme, welche die Flußkammern abschließen und spezielle integrierte Komponenten enthalten, wird in den genannten Schriften nichts berichtet.

Aus dem Stand der Technik zu Mikrofluidsystemen ist daher nicht bekannt, wie die oben genannten gewünschten Eigenschaften von Verbindungen und Anschlüssen verwirklicht werden soll.

Bisher bestehende Anschlüsse zum Einfüllen von Gasen oder Flüssigkeiten, wie z.B. Schlauchklemmen, verhindern zwar effektiv das Austreten von Gasen und Flüssigkeiten, sind aber in miniaturisierter Form sehr unhandlich. Die genormten Anschlüsse, die aus der Medizintechnik bekannt sind (Din-Taschenbuch 227, Medizinische Einmalartikel, Vertikale Normen Beuth Verlag 1999), weisen im allgemeinen im Verhältnis zum Gesamtvolumen ein viel zu hohes Totvolumen auf. Dadurch ist besonders der Umgang mit kleinen Probenmengen nicht möglich. Auch sind die dort gezeigten Steckverbindungen nicht für die Verwendung mit mikrofluidischen Komponenten wie z.B. planaren Flußkammern vorgesehen oder optimiert. Das Verwenden von Schraubverschlüssen widerspricht bei vielen Anwendungen der Anforderung, schnell eine Flüssigkeit in einen Kanal einfüllen zu können. Diese können und werden jedoch zum festen Verschließen von z.B. Flußkammern verwendet. Auch eignen sich geklebte Verbindungen nicht für einmalverwendbare Analysechips.

Es ist die Aufgabe der Erfindung, die genannten Nachteile zu überwinden und ein Mikrofluidsystem und eine Steckereinrichtung bereitzustellen, durch die in schneller und einfacher Weise ein Durchfluß und Austausch von geringen Flüssigkeitsmengen und/oder ein Abschluß von kleinen Flüssigkeitsvolumina ermöglicht wird.

Diese Aufgabe wird gelöst durch ein Mikrofluidsystem gemäß Anspruch 1 und eine Steckereinrichtung gemäß Anspruch 5.

Dabei handelt es sich um ein Mikrofluidsystem mit mindestens einem durchströmbaren Volumen und mindestens einer mit dem Volumen verbundenen Anschlußeinrichtung, die in Form einer sich verjüngenden Vertiefung oder einer sich verjüngenden Erhöhung ausgebildet ist. Durch diese spezielle Geometrie der Anschlußeinrichtung kann gewährleistet werden, daß eine Steckereinrichtung schnell, einfach und insbesondere flüssigkeitsdicht an das Mikrofluidsystem angeschlossen werden kann. Außerdem kann durch diese Geometrie das Totvolumen verringert werden.

Vorzugsweise verjüngt sich sich die Anschlußeinrichtung konisch, hyperbolisch, abschnittsweise konisch und/oder abschnittsweise hyperbolisch. Damit kann ein fester Anschluß von Steckereinrichtungen ermöglicht werden. Insbesondere können Steckereinrichtungen mit unterschiedlichen Formen und Abmessungen verwendet werden, die je nach Form und/oder Abmessung unterschiedlich weit in oder auf die Anschlußeinrichtung gesteckt werden können.

Es ist von Vorteil, wenn die Anschlußeinrichtung durch ihre Form und/oder Abmessungen an üblicherweise verwendete Laborkomponenten angepasst ist. Beispielsweise kann die sich verjüngende Vertiefung an Standardpipettengrößen und -formen angepasst sein. Bei einer abschnittsweise konischen Vertiefung besteht die Vertiefung gewissermaßen aus aufeinanderfolgenden Kegelstümpfen mit unterschiedlichen, vorzugsweise sich nach unten verringernden, Öffnungswinkeln. Dadurch können verschiedene Pipetten mit unterschiedlichen Neigungs- bzw. Öffnungswinkeln fest mit der Anschlußeinrichtung verbunden werden. Auf diese Weise kann auch das Totvolumen weiter verringert werden. Wegen der speziellen Form der Vertiefung können dünne Pipettenspitzen mit wenig Flüssigkeitsvolumen tiefer in die Anschlußeinrichtung gesteckt werden als große Pipettenspitzen. Das Flüssigkeits- bzw. Luftvolumen zwischen der Pipettenspitze und dem durchströmbaren Volumen wird somit minimiert. Daher können verschieden große Pipettenspitzen für dieselbe Anschlußeinrichtung verwendet werden, wobei alle Pipettenspitzen dicht mit der Anschlußeinrichtung abschließen.

Bei einer hyperbolischen Vertiefung können Flüssigkeiten mit Hilfe einer Pipette in das durchströmbare Volumen gedrückt werden; alternativ fließen die Flüssigkeiten beim Abziehen der Pipette aufgrund der Kapillar- und/oder Gravitationskraft in das Volumen.

Eine Anschlußeinrichtung in Form einer sich verjüngenden Erhöhung kann so ausgebildet sein, dass sie an Injektionsflaschenstopfen und/oder Deckelflaschenstopfen angepasst ist. Das Material der Injektionsflaschenstopfen kann beispielsweise Gummi oder Chlorbutyl umfassen.

Gemäß einer vorteilhaften Weiterbildung aller zuvor beschriebenen Mikrofluidsysteme weist das Mikrofluidsystem eine strukturierte Oberfläche auf. Vorzugsweise ist die Strukturierung in Form von Erhöhungen, insbesondere von sich verjüngenden Erhöhungen, ausgebildet. Es ist von Vorteil, wenn die Anschlußeinrichtungen in diesen Erhöhungen ausgebildet sind, insbesondere in Form einer sich verjüngenden Vertiefung. Die innere und äußere Form und Abmessung einer solchen Erhöhung mit einer darin ausgebildeten Anschlußeinrichtung können an üblicherweise verwendete Laborkomponenten angepaßt sein. Damit kann erreicht werden, daß durch die sich verjüngende Erhöhung einerseits eine Steckereinrichtung in schneller, einfacher und stabiler Weise aufgesteckt werden kann; gleichzeitig kann andererseits durch die angepasste Vertiefung eine feste und dichte Verbindung für den Durchfluß von Flüssigkeiten erreicht werden.

Gemäß einer vorteilhaften Weiterbildung aller zuvor beschriebenen Mikrofluidsysteme weist die Anschlußeinrichtung einen Absatz auf. Dadurch kann eine Steckereinrichtung nur bis zu dem Absatz auf oder in die Anschlußeinrichtung gesteckt werden. Insbesondere bei einer Anschlußeinrichtung in Form einer Vertiefung kann somit verhindert werden, daß eine Steckereinrichtung durch zu tiefes Hineinstecken das durchströmbare Volumen verstopft. Ein solcher Absatz muß dabei nicht um den ganzen Innen- oder Außenumfang der Anschlußeinrichtung herumlaufen, er kann beispielsweise in Form eines Halbringes ausgebildet sein.

Vorzugsweise weist die Anschlußeinrichtung der bisher beschriebenen Mikrofluidsysteme eine Aussparung zur Aufnahme eines Einrastelements auf. Somit kann eine Steckereinrichtung mit einem Einrastelement fest mit der Anschlußeinrichtung verbunden und schnell wieder gelöst werden. Die Aussparung kann um die gesamte Anschußeinrichtung herumlaufen oder auch nur an einzelnen Stellen ausgebildet sein.

Ist es nicht erforderlich, die Steckereinrichtung schnell mit der Anschlußeinrichtung zu verbinden und von ihr zu lösen, kann die Anschlußeinrichtung ein Gewinde aufweisen. Damit kann eine besonders feste und stabile Verbindung zwischen einer Steckereinrichtung und der Anschlußeinrichtung erzielt werden.

Es ist von Vorteil, wenn die Anschlußeinrichtung aller oben beschriebenen Mikrofluidsysteme ein optisch transparentes Material umfasst. Dadurch kann auf optischem Wege beispielsweise überprüft werden, ob eine Flüssigkeit die Anschlußeinrichtung und/oder das Volumen durchströmt, ob sich Gasblasen bilden und/oder ob eine optimale Verbindung zwischen der Anschlußeinrichtung und einer Steckereinrichtung besteht.

Vorzugsweise umfassen die oben beschriebenen Mikrofluidsysteme mehrere Anschluβeinrichtungen, die mit einem oder mehreren durchströmbaren Volumina verbunden sind. Insbesondere können die Anschlußeinrichtungen derart angeordnet sein, dass mehrere Anschlußeinrichtungen gemeinsam mit einer Steckervorrichtung verbunden werden können.

Vorteilhafterweise umfasst das Material aller oben beschriebenen Mikrofluidsysteme ein optisch hochwertiges Glas oder einen optisch hochwertigen Kunststoff, d. h. der Kunststoff weist keine Doppelbrechung und/oder Autofluoreszenz auf. Hierfür können beispielsweise cyclische Olefine und Polycarbonat verwendet werden. Ferner kann der Boden und/oder die Decke des durchströmbaren Volumens, entsprechend den Erfordernissen der verwendeten Untersuchungsmethode, eine Dicke aufweisen, die geringer als 190 µm ist. Dadurch werden optimale Eigenschaften für eine Vielzahl von Untersuchungsverfahren erreicht.

Für bestimmte Untersuchungsmethoden, wie z. B. Wechselwirkungsuntersuchungen zwischen Molekülen, ist es wünschenswert, die Moleküle, Makromoleküle oder Zellen zu immobilisieren. Hierfür kann eine innere Oberfläche des durchströmbaren Volumens und/oder der Anschlußeinrichtung oberflächenbehandelt oder funktionalisiert sein, wie beispielsweise durch Molekülgruppen, Gruppen (z.B.-COOH, -NH2, Ketone, Alkohole) oder Makromolekülen wie DNA oder Proteinen. Die auf dieser Oberfläche immobilisierten Proben können bei Reaktion mit einem in Lösung befindlichen Stoff (z. B. Molekül) eine charakteristische Änderung ihres Spektrums aufweisen oder ein charakteristisches Fluoreszenzsignal aussenden. Mit Hilfe des Mikrofluidsystems ist es möglich, die in Lösung befindlichen Moleküle herauszuspülen, so dass dieses Signal störungsarm quantitativ analysiert werden kann.

Die beschriebenen Mikrofluidsystem können vorzugsweise aus einem Stück bestehen. Es gibt somit keine Elemente die vor der Benutzung gereinigt werden müssen, und es kann mit geringen Aufwand steril gehalten werden. Es muss auch vor der Benutzung nicht aufwendig zusammengefügt werden. In diesem Fall ist es normalerweise auch nur zur einmaligen Benutzung vorgesehen.

Erfindungsgemäß wird auch eine Steckereinrichtung zur Verwendung in einem der oben beschriebenen Mikrofluidsysteme bereitgestellt, wobei die Steckereinrichtung derart ausgebildet ist, dass sie in Eingriff mit der Anschlußeinrichtung bringbar ist.

Insbesondere kann dies bedeuten, dass die Steckereinrichtung derart ausgebildet ist, dass eine feste, insbesondere flüssigkeitsdichte, Verbindung zwischen der Steckereinrichtung und der Anschlußeinrichtung gebildet werden kann. Dazu kann die Steckereinrichtung ein sich verjüngendes Teilelement aufweisen, das an die Verjüngung der Anschlußeinrichtung angepasst ist. Bei einer Anschlußeinrichtung in Form einer sich verjüngenden Vertiefung kann die Steckereinrichtung ebenfalls ein sich in Steckrichtung, mit anderen Worten nach unten, verjüngendes Teilelement aufweisen. Analog kann bei einer Anschlußeinrichtung in Form einer sich verjüngenden Erhöhung die Steckereinrichtung ein sich gegen die Steckrichtung verjüngendes Teilelement aufweisen. Somit kann kann die Verbindung zwischen Steckereinrichtung und Anschlußeinrichtung ein geringes Totvolumen aufweisen.

Gemäß einer bevorzugten Weiterbildung aller zuvor beschriebenen Steckereinrichtungen ist diese derart ausgebildet, dass sie wenigstens teilweise flächig an der Anschlußeinrichtung anliegt. Dadurch kann eine besonders feste und stabile Verbindung mit der Anschlußeinrichtung erreicht werden.

Vorteilhafterweise können die beschriebenen Steckereinrichtungen derart ausgebildet sein, dass sie gasdurchlässig in Eingriff mit der Anschlußeinrichtung bringbar sind. Dies kann dadurch erreicht werden, dass zumindest teilweise ein Abstand, bspw. mittels Abstandhalter, zwischen Steckereinrichtung und Anschlußeinrichtung ausgebildet wird. Steckereinrichtung und Anschlußeinrichtung können so aufeinander abgestimmt sein, dass die Steckereinrichtung durch festes Andrücken gasundurchlässig in Eingriff bringbar ist. Dies kannbeispielsweise durch Abstandhalter aus elastischem Kunststoff in Form von Ausbuchtungen erzielt werden.

Gemäß einer vorteilhaften Weiterbildung aller zuvor beschriebenen Steckereinrichtungen umfassen diese mindestens ein Einrastelement in Form einer Ausbuchtung. Dadurch kann die Steckereinrichtung schnell mit einer entsprechenden Anschlußeinrichtung in Eingriff gebracht werden und außerdem eine feste Verbindung bilden. Die Steckereinrichtungen können dann zusätzlich derart ausgebildet sein, dass sich die Einrastelemente wieder leicht ausrasten lassen, um so die Verbindung zwischen Anschlußeinrichtung und Steckereinrichtung zu lösen. Dazu können weitere Ausbuchtungen derart ausgebildet sein, dass durch Beaufschlagung mit Druck ein Drehmoment entsteht, wodurch sich die Einrastelemente ausrasten lassen. Alle beschriebenen Ausbuchtungen können um die Steckereinrichtung herumlaufen oder nur an einzelnen Stellen ausgebildet sein. Die Einrastelemente können bspw. in Form von Widerhaken ausgebildet sein.

Gemäß einer vorteilhaften Alternative weist die Steckereinrichtung ein Gewinde auf. Damit kann ein festes Verbinden von Steckereinrichtung und Anschlußeinrichtung ermöglicht werden.

Gemäß einer weiteren vorteilhaften Alternative kann die Steckereinrichtung nach Art eines Kronkorkens mit der Anschlußeinrichtung verbunden werden. Dabei wird die Steckereinrichtung auf die Anschlußeinrichtung gepresst. Dadurch kann eine höhere Sterilität gewährleistet werden.

Vorzugsweise kann jede beschriebene Steckereinrichtung derart ausgebildet sein, dass sie an einem Teil der die Aufnahmeeinrichtung umgebenden Oberfläche des Mikrofluidsystems flächig anliegt. Dadurch kann eine stabile Verbindung zwischen Steckereinrichtung und Anschlußeinrichtung gewährleistet werden.

Gemäß einer bevorzugten Weiterbildung umfasst jede der zuvor beschriebenen Steckereinrichtungen ein optisch transparentes Material. Dadurch kann bspw. der Fluß durch die Steckereinrichtung und/oder das Volumen, das Vorhandensein von Luftblasen und/oder die Verbindung zwischen Steckereinrichtung und Anschlußeinrichtung optisch überprüft werden.

Es ist von Vorteil, wenn die zuvor beschriebenen Steckereinrichtungen ein biokompatibles Material umfassen. Damit können unerwünschte Wechselwirkungen zwischen Flüssigkeit und Material vermieden werden. Die Steckereinrichtungen können beispielsweise ganz oder teilweise aus biokompatiblem Material bestehen oder mit einem biokompatiblen Material ganz oder teilweise beschichtet sein.

Gemäß einer vorteilhaften Weiterbildung aller zuvor beschriebenen Steckereinrichtungen umfassen diese mindestens ein Durchgangsloch. Mit einem Durchgangsloch kann die Zuführung von Flüssigkeit und oder Gasen ermöglicht werden.

Vorzugsweise wird jedes Durchgangsloch mit einer Zuführeinrichtung, insbesondere einem Schlauch, verbunden. Jede Zuführeinrichtung kann beispielsweise mit einer Flüssigkeits- oder Gasquelle verbunden sein.

Vorteilhafterweise kann jedes Durchgangsloch mit einem Septum verschlossen werden. Die Septen können beispielsweise Silikon, Teflon, Naturkautschuk, Gummi, Styrol-Butadien-Gummi oder Butyl umfassen. Das Material der Steckereinrichtung kann Kunststoff oder Aluminium umfassen.

Vorzugsweise umfassen die beschriebenen Durchgangslöcher Mikrofilter.

Gemäß einer vorteilhaften Weiterbildung der beschriebenen Steckereinrichtungen sind diese als Verschlußeinrichtungen ausgebildet ist.

Es ist von Vorteil, wenn die zuvor beschriebenen Steckereinrichtung elektronische Komponenten, Flüssigkeitsreservoire und/oder Gasreservoire umfassen. Beispielsweise kann die Steckereinrichtung Elektroden umfassen, die derart ausgebildet sind, dass sie in das durchströmbare Volumen reichen, wodurch in der Flüssigkeit eine elektrische Spannung angelegt werden kann. Sie können auch gleichzeitig in ein in die Steckereinrichtung integriertes Flüssigkeitsreservoir reichen und somit eine leitende Verbindung zwischen dem Flüssigkeitsreservoir und dem durchströmbaren Volumen bilden. Die elektronischen Komponenten können zusätzlich als Steuereinrichtungen ausgebildet sein und die Zugabe von Flüssigkeit und/oder Gas in das durchströmbare Volumen steuern. Alternativ kann diese Zugabe auch über externe Anschlüsse gesteuert werden. Die Steuerung kann sich bspw. auf die Menge und/oder Zeitdauer beziehen; die Zugabe kann mittels Druckluft erfolgen. Ein weiterer Vorteil dieser Weiterbildung besteht darin, dass durch die unmittelbare Nähe des Flüssigkeits- oder Gasreservoirs zum durchströmbaren Volumen die benötigte Menge an Flüssigkeit oder Gas stark reduziert werden kann.

Durch die Erfindung wird auch eine Steckervorrichtung aus mindestens zwei Steckereinrichtungen bereitgestellt, wobei die Steckereinrichtungen als Einheit ausgebildet sind. Eine solche Steckervorrichtung kann mit mehreren Anschlußeinrichtungen gleichzeitig in Eingriff gebracht werden.

Durch die Erfindung wird außerdem ein System bereitgestellt, das mindestens eines der zuvor beschriebenen Mikrofluidsysteme und mindestens eine der zuvor beschriebenen Steckereinrichtungen und/oder -vorrichtungen umfasst.

Weitere Merkmale der Erfindung werden anhand der Ausführungsbeispiele in den Zeichnungen beschrieben. Dabei zeigen in schematischer Form:
Fig. 1 einen Querschnitt durch ein erfindungsgemäßes Mikrofluidsystem und eine Steckereinrichtung in Form einer Vertiefung,
Fig. 2 einen Querschnitt durch ein Mikrofluidsystem mit einer auf eine Pipettenspitze angepassten Anschlußeinrichtung,
Fig. 3 in dreidimensionaler Ansicht den Verlauf einer Anschlußeinrichtung in Form einer Vertiefung mit einer abschnittsweise konischen Verjüngung,
Fig. 4 in dreidimensionaler Ansicht den Verlauf einer Anschlußeinrichtung in Form einer Vertiefung mit einer hyperbolischen Verjüngung,
Fig. 5 in dreidimensionaler und Querschnittsansicht eine Darstellung einer Anschlußeinrichtung mit einem Absatz,
Fig. 6 einen Querschnitt durch eine Anschlußeinrichtung in Form einer konischen Erhöhung und mit einer Steckereinrichtung mit und ohne Einrastelement,
Fig. 7 einen Querschnitt durch ein Mikrofluidsystem mit einer strukturierten Oberfläche und eine Anschlußeinrichtung in Form einer konischen Vertiefung,
Fig. 8 einen Querschnitt durch ein Mikrofluidsystem mit einer strukturierten Oberfläche und eine Steckereinrichtung mit einem Einrastelement,
Fig. 9a eine perspektivische Ansicht einer Steckervorrichtung,
Fig. 9b eine perspektivische Ansicht eines Mikrofluidsystems mit einer Anschußvorrichtung,
Fig. 9c einen Querschnitt durch ein System aus einer Steckervorrichtung und einem Mikrofluidsystem mit einer Anschlußvorrichtung,
Fig. 10a einen Querschnitt durch ein Mikrofluidsystem und eine Steckereinrichtung mit Ausbuchtungen zum Lösen der Steckereinrichtung, und
Fig. 10b einen Querschnitt durch ein Mikrofluidsystem und eine Steckereinrichtung mit ausgerasteten Einrastelementen.

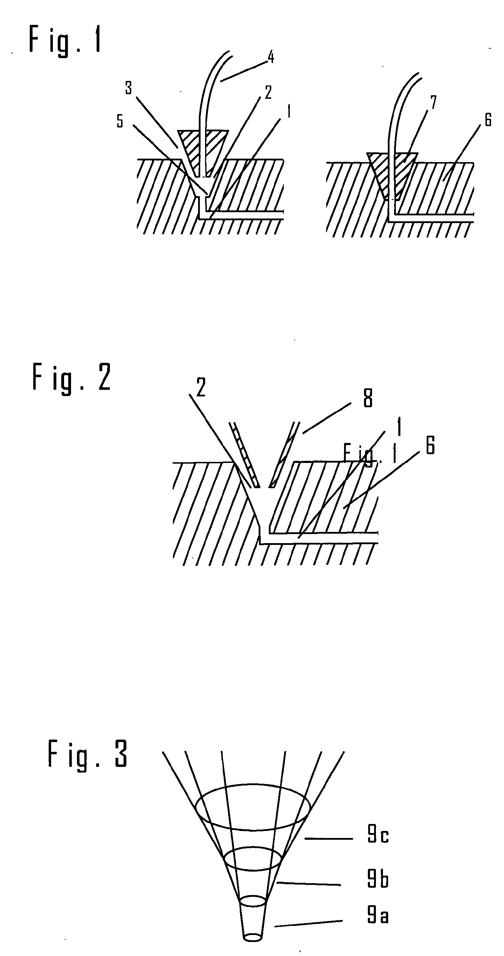

Fig. 1 zeigt den Querschnitt eines Mikrofluidsystems 6 und einer Steckereinrichtung 7. In dem Mikrofluidsystem 6 befindet sich ein durchströmbares Volumen 1 in Verbindung mit der Anschlußeinrichtung in Form einer Vertiefung mit konischer Verjüngung 2 und einem Absatz 5 zur Vermeidung von Totvolumen. Die Steckereinrichtung ist ebenfalls in Form einer konischen Verjüngung 3 in Steckrichtung ausgebildet. Die Steckereinrichtung umfasst ein Durchgangsloch, mit dem ein Schlauch 4 verbunden ist.

In Fig. 2 wird der Querschnitt einer Anschlußeinrichtung gezeigt, welche für eine Pipettenspitze 8 optimiert ist. In das Volumen 2 des Mikrofluidsystems 6 mit der konischen Anschrägung 2 kann somit mit einer Pipette Flüssigkeit ohne Totvolumen eingefüllt werden. Für handelsübliche Pipetten kann der kleinste (untere) Innendurchmesser zwischen 0.4 mm und 1 mm liegen, der größte (obere) Innendurchmesser zwischen 0.7 mm und 6 mm und die Tiefe der Vertiefung zwischen 1 mm und 15 mm liegen.

Fig. 3 zeigt den Verlauf einer Anschlußeinrichtung in Form einer Vertiefung mit abschnittsweise konischer Verjüngung 9a, 9b und 9c, bei der sich die Öffnungswinkel der Kegelstümpfe nach unten verringern, in einer dreidimensionalen Darstellung. Dadurch können verschieden Pipettenspitzen verwendet werden, ohne das ein nennenswertes Totvolumen entsteht.

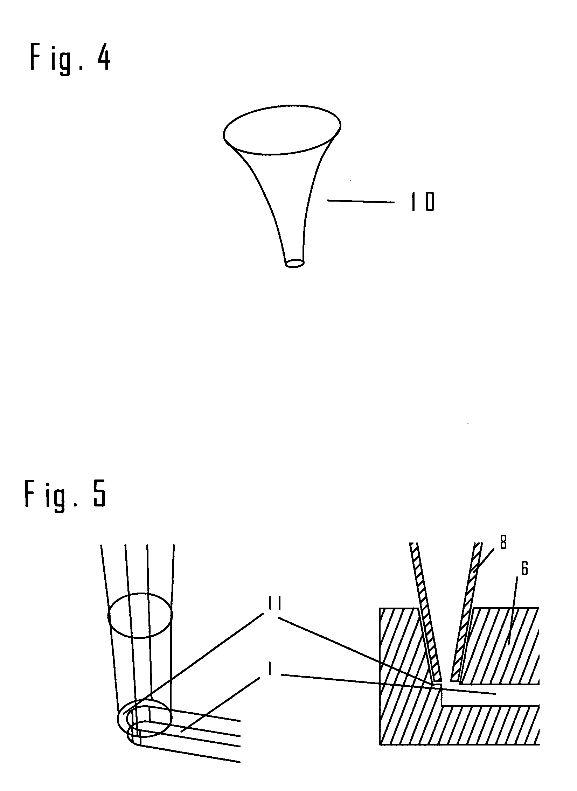

Fig. 4 zeigt den Verlauf einer Anschlußeinrichtung in Form einer Vertiefung mit hyperbolischer Verjüngung 10.

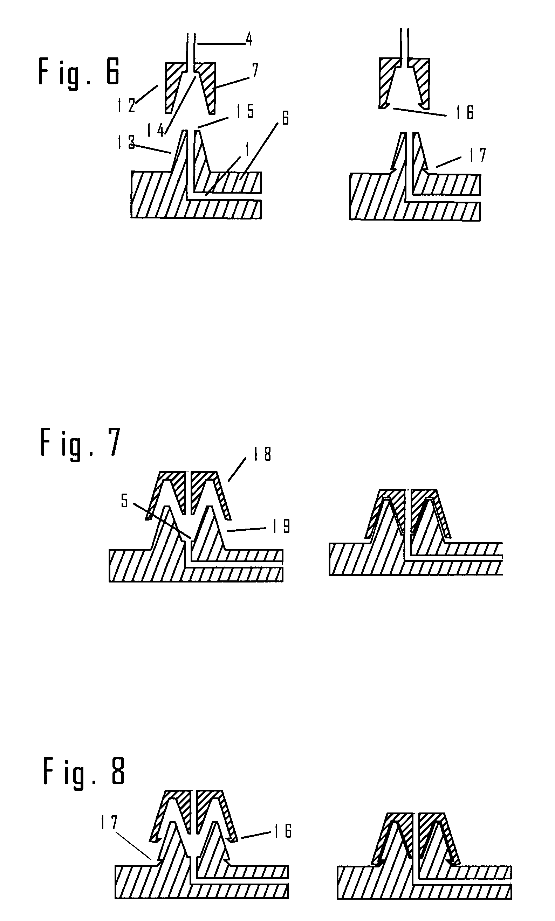

Fig. 5 zeigt in dreidimensionaler und Querschnittsansicht ein Ausführungsbeispiel eines Mikrofluidsystems 6 mit einer Anschlußeinrichtung mit einem Absatz 11. Dadurch ist gewährleistet, dass die in der Pipettenspitze 8 befindliche Flüssigkeit auch bei festem Aufsetzen der Pipettenspitze in das durchströmbare Volumen 1 gelangen kann. Hier ist der Absatz in Form eines Halbringes ausgebildet.

In Fig. 6 sind zwei Ausführungsbeispiele einer Anschlußeinrichtung in Form einer sich konisch verjüngenden Erhöhung 13 zu sehen. Die an die Anschlußeinrichtung angepaßte Steckereinrichtung 7 weist innen eine konische Verjüngung gegen die Steckrichtung auf. Die Außenfläche 12 ist zylindrisch. Zur Vermeidung von Totvolumens sind an der Steckereinrichtung und an der Anschlußeinrichtung Absätze 14 und 15 ausgebildet. Im Gegensatz zu dem Ausführungsbeispiel auf der linken Seite, weist das Beispiel auf der rechten Seite Einrastelemente 16 in Form von Widerhaken und entsnrechende Aussparuggen 17 auf. Damit kann die Steckereinrichtung besonders fest und dicht mit der Anschlußeinrichtung verbunden werden.

Die Anschlußeinrichtung kann beispielsweise in Form einer konischen Erhöhung ausgebildet sein, bei der der Öffnungswinkel des Kegelstumpfes 6° beträgt und der kleinste (obere) Durchmesser zwischen 3.5 mm und 4.5 mm liegt. Die Höhe der Erhöhung kann zwischen 6 mm und 9 mm variieren. Damit können die aus der Medizin bekannten Luer-Stecker in vorteilhafter Weise fest mit dem Mikrofluidsystem verbunden werden.

Fig. 7 zeigt ein Ausführungsbeipiel eines Mikorfluidsystems mit einer strukturierten Oberfläche in Form einer konischen Erhöhung 19. Die Anschlußeinrichtung ist in Form einer sich konisch verjüngenden Vertiefung ausgebildet. Dadurch können sowohl die äußeren als auch die inneren Abmessungen an die Abmessungen üblicher Laborkomponenten angepasst werden. So können beispielsweise sowohl Standardstecker, Pipettenspitzen als auch spezielle Stecker verwendet werden. In dem gezeigten Beispiel ist die Steckereinrichtung derart ausgebildet, dass sie einen Teil der die Anschlußeinrichtung umgebenden Oberfläche überdeckt, wodurch die Stabilität erhöht wird. Wie in Fig.1 ist auch hier ein Absatz 5 zum Vermeiden von Totvolumen dargestellt. Rechts wird die Anschlußeinrichtung und das Mikrofluidsystem im verbundenem Zustand gezeigt.

Fig. 8 zeigt einen ähnliches Mikrofluidsystem mit Steckereinrichtung wie Fig. 7; allerdings sind an der Steckereinrichtung Widerhaken 16 und an der Anschlußeinrichtung Aussparungen 17 angebracht, die es erlauben, die Steckereinrichtung besonders fest und dicht auf die Anschlußeinrichtung aufzusetzen.

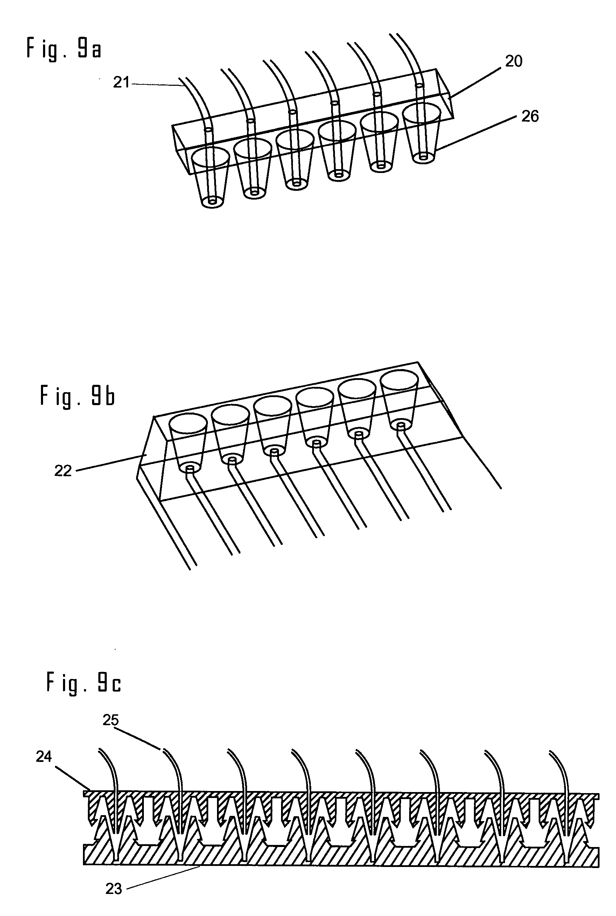

Fig. 9a zeigt eine Steckervorrichtung, bei der mehrere Stecker als Einheit ausgebildet sind. Die Steckervorrichtung umfasst eine Steckerleiste 20, an der konisch geformte Teilelemente 26 angeordnet sind. Mit der Steckerleiste sind Schläuche 21 verbunden.

Fig. 9b zeigt ein der Steckervorrichtung aus Fig. 9a entsprechende Mikrofluidsystem mit einer Anschlußvorrichtung 22, die mehrere Anschlußeinrichtungen und damit verbundene durchströmbare Volumina umfasst.

In Fig. 9c ist ein Querschnitt durch eine Steckervorrichtung 24 mit Schläuchen 25 und eine Anschlußvorrichtung 23 gezeigt. Die Anschlußvorrichtung 23 kann mit der Steckervorrichtung 24 über entsprechende Widerhaken fest verbunden werden.

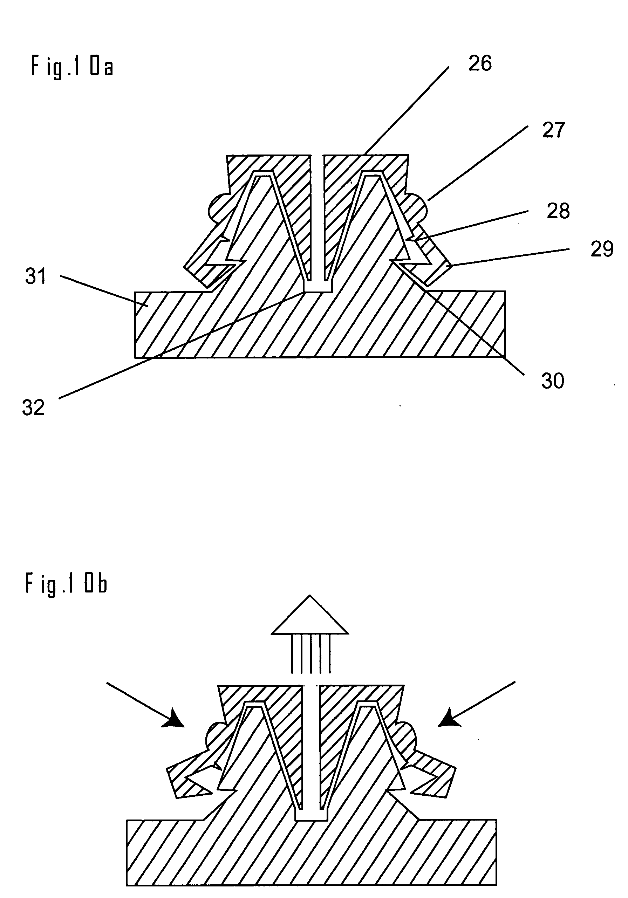

Fig. 10a zeigt ein Ausführungsbeispiel eines Widerhakensystems als Querschnittszeichnung. In die Steckereinrichtung 26 ist eine zusätzliche Ausbuchtung 27 sowie ein Abstandhalter 28 angebracht. Über den Widerhaken 29 ist die Steckereinrichtung über die Aussparung 30 fest mit dem Mikrofluidsystem 31 verbunden, so dass das Volumen 32 einfach befüllt werden kann. Durch das Zusammenpressen der Ausbuchtungen 27 (siehe Fig. 10b) wird aufgrund des Abstandhalters 28 ein Drehmoment erzeugt, welches die Widerhaken 29 auseinanderbewegt und damit die Steckereinrichtung von der Anschlußeinrichtung löst.

## Patentansprüche

1. Mikrofluidsystem mit mindestens einem durchströmbaren Volumen und mindestens einer mit dem Volumen verbundenen Anschlußeinrichtung, die in Form einer sich verjüngenden Vertiefung oder einer sich verjüngenden Erhöhung ausgebildet ist.

2. Mikrofluidsystem nach Anspruch 1, in welchem sich die Anschlußeinrichtung konisch, hyperbolisch, abschnittsweise konisch und/oder abschnittsweise hyperbolisch verjüngt.

3. Mikrofluidsystem nach einem der vorangegangenen Ansprüche, in welchem die Anschlußeinrichtung einen Absatz aufweist.

4. Mikrofluidsystem nach einem der vorangegangenen Ansprüche, in welchem die Anschlußeinrichtung eine Aussparung zur Aufnahme eines Einrastelements aufweist.

5. Steckereinrichtung zur Verwendung in einem Mikrofluidsystem gemäß einem der Ansprüche 1- 4, wobei die Steckereinrichtung derart ausgebildet ist, dass sie in Eingriff mit der Anschlußeinrichtung bringbar ist.

6. Steckereinrichtung nach Anspruch 5, welche derart ausgebildet ist, dass sie wenigstens teilweise flächig an der Anschlußeinrichtung anliegt.

7. Steckereinrichtung nach Anspruche 5 oder 6, welche mindestens ein Einrastelement in Form einer Ausbuchtung umfasst.

8. Steckereinrichtung nach einem der Ansprüche 5-7, welche derart ausgebildet ist, dass sie an einem Teil der die Anschlußeinrichtung umgebenden Oberfläche des Mikrofluidsystems flächig anliegt.

9. Steckereinrichtung nach einem der Ansprüche 5-8, welche mindestens ein Durchgangsloch umfasst.

10. Steckereinrichtung nach Anspruch 9, wobei jedes Durchgangsloch mit einer Zuführeinrichtung, insbesondere einem Schlauch, verbunden ist.

11. Steckereinrichtung nach einem der Ansprüche 5-9, welche als Verschlußeinrichtung ausgebildet ist.

12. Steckereinrichtung nach einem der Ansprüche 5-11, welche elektronische Komponenten, Flüssigkeitsreservoire und/oder Gasreservoire umfasst.

13. Steckervorrichtung aus mindestens zwei Steckereinrichtungen gemäß einem der Ansprüche 5-12, wobei die Steckereinrichtungen als Einheit ausgebildet sind.
